# EUROPÄISCHE PATENTSCHRIFT

(11) **EP 2 757 359 B1**
(45) Veröffentlichungstag und Bekanntmachung des Hinweises auf die Patenterteilung: **19.04.2017**
(21) Anmeldenummer: 13191044.0
(22) Anmeldetag: 31.10.2013
(51) Int. Cl.: G01M 3/04, G01M 3/18, G01M 3/16, F17D 5/06

(54) **Vorrichtung zum Feststellen von Leckagen einer Flüssigkeitsleitung, insbesondere Hochdruck-Flüssigkeitsleitung**
Apparatus for detecting leaks from a fluid conduit, in particular a high pressure liquid conduit
Dispositif permettant de déterminer les fuites d'une conduite de liquide, en particulier d'une conduite de liquide sous haute pression

(30) Priorität: 12.12.2012 DE 102012112147
(43) Veröffentlichungstag der Anmeldung: 23.07.2014
(73) Patentinhaber: Piller Entgrattechnik GmbH, 71254 Ditzingen (DE)
(72) Erfinder: Piller, Thomas, 71254 Ditzingen (DE)
(74) Vertreter: Fleck, Hermann-Josef

(56) Entgegenhaltungen:
- EP-A1- 0 257 575
- EP-A1- 2 112 491
- WO-A1-2009/146667
- DE-A1- 1 814 857
- DE-A1- 19 521 018
- US-A- 4 922 232
- US-A1- 2004 146 362
- US-A1- 2009 115 433

## Beschreibung

Die Erfindung betrifft eine Vorrichtung zum Feststellen von Leckagen einer Flüssigkeitsleitung, insbesondere Hochdruck-Flüssigkeitsleitung nach dem Oberbegriff des Anspruches 1.

Derartige Flüssigkeitsleitungen werden zur Verbindung von Teilen bzw. Aggregaten einer Maschinen-Anlage eingesetzt. Dabei besteht gerade bei Flüssigkeiten, die mit hohem Druck übertragen werden, während der Betriebszeit immer wieder die Gefahr, dass sich im Material der Flüssigkeitsleitung feine Haarrisse bilden, durch die Flüssigkeitsstrahlen in die Atmosphäre austreten können. Dies führt dann oft zu Fehlfunktionen der angeschlossenen Aggregate der Maschinen-Anlage oder gar Gefährdung von Personen.

Aus der DE 1 814 857 A1 ist eine Anordnung zur Signalisierung von Leckagen in einer Rohrleitung bekannt, bei dem ein elektrischer Leiter und ein elektrisch leitendes Leitergebilde vorgesehen sind, die beide an eine Spannungsquelle angeschlossen sind, wobei eine entstehende leitende Verbindung einen Signalstrom auslöst. Der elektrische Leiter ist in der elektrisch nicht leitenden Rohrleitung und das elektrisch leitende Leitergebilde ist außerhalb der Rohrleitung nicht isoliert angeordnet.

Es ist auch ein Rohrleitungssystem, insbesondere zur Übertragung von Fernwärme, bekannt, das aus einem Innenrohr für das Medium und einem das Innenrohr mit Abstand umschließenden Außenrohr sowie mit Füllmaterial zwischen dem Innenrohr und dem Außenrohr besteht. In diesem Füllmaterial ist eine Sensorleitung eingebettet, die zur Detektion und Ortung von Undichtigkeiten dient, wobei ein Laufzeit-Ortungsverfahren verwendet wird. Die Sensorleitung muss daher aus einem bestimmten Material, z. B. einer Kupfer-Nickel-Legierung, bestehen, wie der DE 195 21 018 A1 zu entnehmen ist.

Die US 2009/0115433 A1 zeigt eine Vorrichtung mit einem Innenrohr zum Transport von Flüssigkeiten oder Gasen mit mindestens einem elektrischen Leiter, der längs des Innenrohres verläuft und in eine Wärmeisolierschicht eingebettet ist. Dabei ist das Innenrohr mit einem verhältnismäßig kleinen Durchmesser und die Wärmedämmschicht mit einer großen Stärke um das Innenrohr angeordnet. Die Wärmedämmschicht ist von einem wasserundurchlässigen Außenrohr umgeben, so dass die gesamte Vorrichtung im Aufbau kompliziert und an einem bereits verlegten Innenrohr nicht mehr anbringbar ist.

Eine ähnliche Vorrichtung zeigt auch die EP 2 112 491 A1. Auch hier ist in die Wärmedämmschicht eine Sensorleitung eingebettet. An dieser Sensorleitung sind zwei Messmodule angeschlossen, die für unterschiedliche Messverfahren eingerichtet sind. Zudem weist die Vorrichtung ein Konfigurationsmodul zur Auswahl und Konfiguration der Messmodule auf.

Die EP 0 257 575 A1 zeigt wärmeleitende Rohre, die z. B. für Fernheizleitungen eingesetzt werden. Diese Rohre haben ein Leitungsrohr, das von einem Isoliermantel umschlossen ist, in dem zwei Überwachungsleitungen eingebettet sind. Für die einwandfreie und eindeutige Ortung von Fehlern sowohl in der Haupt-, wie auch in den Abzweigleitungen auch außerhalb der Muffenbereiche sind die erste Leitung über die Länge des Rohres isoliert und die zweite Leitung über die Länge des Rohres blank. Die erste isolierte Leitung weist an ihren Enden einen in den Muffenbereich reichenden leitenden Abschnitt auf.

Aus der US 4,922,232 ist ein Tanküberwachungssystem bekannt, das einen Detektor aufweist, der aus zwei Elektroden besteht, die gegeneinander isoliert sind und zwar mit einem Material, das von der Flüssigkeit aufgelöst wird, wenn eine Leckage des Tanks auftritt.

Die WO2009/146667 A1 zeigt eine Drainageleitung, die mit einem Textilstreifen umschlossen ist, dessen Breite größer ist als der Umfang der Drainageleitung und daher diese überlappt. Im Bereich der Überlappung sind Verbindungsmittel vorgesehen, die den Textilstreifen auf der Drainageleitung festhalten.

Aus der US 2004/0146362 A1 sind Kabelträger bekannt, die als gefaltete Zylinder oder Zylinderteile ausgebildet sind und Kammern zur Aufnahme von Kabeln aufweisen. Diese Kabelträger sind um die Rohrleitungen anbringbar oder in die Rohrleitungen einbringbar.

Es ist Aufgabe der Erfindung, für derartig hoch belastete Flüssigkeitsleitungen eine Vorrichtung zu schaffen, bei der mit einfachen Mitteln eine Leckage schon im Anfangsstadium festgestellt und daraus folgende Fehlfunktionen der angeschlossenen Aggregate vermieden werden können.

Die gestellte Aufgabe wird durch die Merkmale des Anspruchs 1 oder 2 gelöst, je nachdem ob die Flüssigkeitsleitungen aus nichtleitendem Material, insbesondere Kunststoff, oder leitendem Material, insbesondere Metall, besteht.

Bei einer Flüssigkeitsleitung aus nichtleitendem Material, insbesondere Kunststoff, ist nach der Erfindung vorgesehen, dass die Flüssigkeitsleitung von einer Matte vollständig umschlossen ist, die aus Baumwolle, saugfähigem Gewebe oder dgl. besteht, innen offen und an ihrer Außenseite mit einer flüssigkeitsdichten Folie abgeschlossen ist, dass die beiden Elektroden unter der Flüssigkeitsleitung auf der der Flüssigkeitsleitung zugekehrten Seite der Matte angeordnet und mittels einer saugfähigen Schicht darauf befestigt und abgedeckt sind, dass die beiden Elektroden am Ende der Flüssigkeitsleitung für den Auslass des Messgerätes frei zugänglich sind und dass das Signal von einer Maschinensteuerung verwertet und/oder über eine Anzeigevorrichtung optisch und/oder akustisch abgebbar ist.

Zum anderen ist bei einer Flüssigkeitsleitung aus leitendem Material, insbesondere Metall, nach der Erfindung vorgesehen, dass die Flüssigkeitsleitung von einer Matte vollständig umschlossen ist, die aus Baumwolle, saugfähigem Gewebe oder dgl. besteht, innen offen und an ihrer Außenseite mit einer flüssigkeitsdichten Folie abgeschlossen ist, dass die Elektrode unter der Flüssigkeitsleitung auf der der Flüssigkeitsleitung zugekehrten Seite angeordnet und mittels einer saugfähigen Schicht darauf befestigt und abgedeckt ist, dass die Elektrode und die Flüssigkeitsleitung für den Anschluss des Messgerätes frei zugänglich sind und dass das Signal von einer Maschinensteuerung verwertet und über eine Anzeigevorrichtung optisch und/oder akustisch abgebbar ist.

In jedem Fall führt die saugfähige Innenseite der Matte schon geringe Mengen der aus den Leckagestellen austretenden Flüssigkeitsstrahlen den unter der Flüssigkeitsleitung liegenden Elektroden bzw. Elektrode zu. Die führt zu einer Verringerung des Widerstandes oder der Impedanz bei dem angeschlossenen Messgerät, das dann das Signal auslöst.

Der Aufbau der Vorrichtung ist stets einfach und kann auch an bereits verlegten Flüssigkeitsleitungen vorgenommen werden.

Die Anzeigevorrichtung kann in das Messgerät integriert oder von diesem entfernt angeordnet und drahtgebunden oder drahtlos in Datenübertragungsverbindung gebracht sein.

Vorteilhafte Ausgestaltungen der Vorrichtungen können den Unteransprüchen entnommen werden.

Über den Umfang der Flüssigkeitsleitung aus Kunststoff können auch mehrere Elektrodenpaare beabstandet angeordnet sein, die an einem Ende der Flüssigkeitsleitung getrennt voneinander parallel geschaltet und mit dem Messgerät verbunden sind.

Dabei können auch über den Umfang der Flüssigkeitsleitung aus Metall mehrere einzelne Elektroden beabstandet angeordnet sein, die an einem Ende der Flüssigkeitsleitung parallel geschaltet und zusammen mit der Flüssigkeitsleitung mit dem Messgerät verbunden sind.

In jedem dieser Fälle verändert sich beim Eintritt von Flüssigkeit bzw. von wässrigen Medien in die saugfähige Matte der elektrische Widerstand zwischen den beiden Elektroden bzw. der Flüssigkeitsleitung aus Metall und der Elektrode so weit, dass das Messgerät anspricht und über die Anzeigevorrichtung ein Signal auslöst. Auch andere elektrische Verschaltungen der Elektroden sind denkbar um eine elektrische Widerstandsänderung bzw. Impedanzänderung über den Mattenbereich zu erfassen.

Die aus saugfähigem Material, z. B. Baumwolle oder saugfähige Fasern, bestehende Matte erstreckt sich in ihrer Länge über die gesamte Länge der Flüssigkeitsleitung und ist in ihrer Breite größer als der Außenumfang der Flüssigkeitsleitung ausgeführt, so dass sie sich mit ihren längsgerichteten Rändern überlappen

Die Außenseiten der Matte tragen entlang ihrer längsgerichteten Ränder z. B. längsgerichtete Streifen eines Klettverschlusses. Der eine Streifen steht über den zugeordneten Rand der Matte vor und der andere Streifen ist gegenüber dem zugeordneten Rand der Matte etwas zurückgesetzt. Dann lassen sich beide Ränder der Matte überlappend gut miteinander verbinden.

Die überlappende Lage der Matte um die Flüssigkeitsleitung kann auch dadurch festgelegt werden, dass die überlappende Verbindung der längsgerichteten Ränder der Matte um die Flüssigkeitsleitung mittels mehrerer beabstandeter Klettverschlussstreifen erfolgt, die in gleichmäßigen Abständen längs der Flüssigkeitsleitung sich über den Außenumfang derselben erstrecken. Alternativ oder zusätzlich kann die überlappende Verbindung durch einen sich über die ganze Länge der Vorrichtung erstreckenden Reißverschluss erfolgen.

Dieselbe Wirkung kann auch bei einer Vorrichtung erreicht werden, bei der über den Umfang der Flüssigkeitsleitung aus Kunststoff mehrere Paare von Elektroden beabstandet in die Matte eingebracht sind. Am Ende der Flüssigkeitsleitung sind diese Elektroden getrennt voneinander parallel geschaltet und mit dem Messgerät verbunden. Damit ist jede Stelle der Flüssigkeitsleitung mit einem Elektrodenpaar benachbart, so dass eine Leckage wieder sehr früh festgestellt werden kann.

Die Ansprechsicherheit der Vorrichtung lässt sich dadurch verbessern, dass über den Umfang der Flüssigkeitsleitung aus Metall mehrere einzelne Elektroden beabstandet in die Matte eingebracht sind, die an einem Ende der Flüssigkeitsleitung parallel geschaltet und zusammen mit der Flüssigkeitsleitung mit dem Messgerät mit Anzeigevorrichtung verbunden sind. Dann spielt es praktisch keine Rolle mehr, an welcher Stelle der Länge und des Umfangs der Flüssigkeitsleitung die Leckage auftritt, da an jeder Stelle der Flüssigkeitsleitung eine Strecke Elektrode-Flüssigkeitsleitung als Widerstands-Messstrecke bereitsteht.

Eine Maschinen-Anlage kann mehrere Flüssigkeitsleitungen aufweisen, die Aggregate einer Maschinen-Anlage miteinander verbinden. Jede Flüssigkeitsleitung ist dabei mit einem zugeordneten Messgerät mit Anzeigevorrichtung versehen.

Dabei kann eine Flüssigkeitsleitung zwischen zwei Aggregaten einer Maschinen-Anlage auch aus mehreren Teil-Flüssigkeitsleitungen zusammengesetzt sein, die über Koppelglieder miteinander verbunden sind und denen jeweils ein eigenes Messgerät mit Anzeigevorrichtung zugeordnet ist.

Die Erfindung wird anhand von mehreren, in den Zeichnungen dargestellten Ausführungsbeispielen näher erläutert. Es zeigen:
- Fig. 1: eine Matte in ihrer Dimensionierung für eine überlappende Verbindung um eine Flüssigkeitsleitung z. B. aus Kunststoff,
- Fig. 2: eine Matte mit einem Klettverschluss entlang der längsgerichteten Ränder der Matte,
- Fig. 3: eine Matte, bei der die Elektroden mit Anschlusskontakten verbunden sind, die am Ende der Matte auf dieser befestigt sind,
- Fig. 4: eine andere Ausbildung und Befestigung der Anschlusskontakte der Elektroden am Ende der Matte,
- Fig. 5: im Querschnitt eine Flüssigkeitsleitung aus Kunststoff mit überlappender Anordnung einer Matte mit Klettverschluss an den längsgerichteten Rändern der Matte und Anschluss des Messgerätes an einem Paar von Elektroden,
- Fig. 6: einen Teil des Querschnitts der Flüssigkeitsleitung mit einer Matte mit nur einer Elektrode und Anschluss des Messgerätes an dieser Elektrode und der Flüssigkeitsleitung aus Metall,
- Fig. 7: eine Flüssigkeitsleitung aus Kunststoff mit quadratischem Querschnitt, bei der die Ränder der Matte über der Flüssigkeitsleitung über Verschlusselemente direkt miteinander verbunden sind und
- Fig. 8: eine schematische Darstellung einer Maschinen-Anlage, wobei drei Teile der Anlage über Teil-Flüssigkeitsleitungen und eine Flüssigkeitsleitung miteinander verbunden sind.

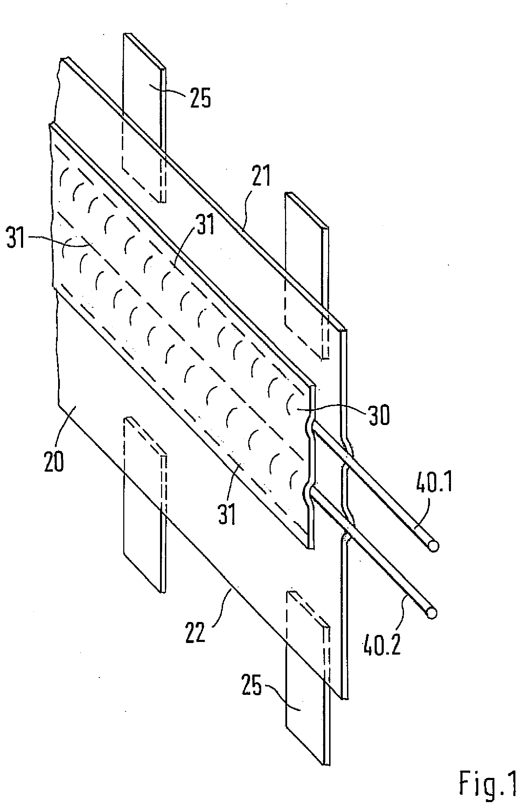

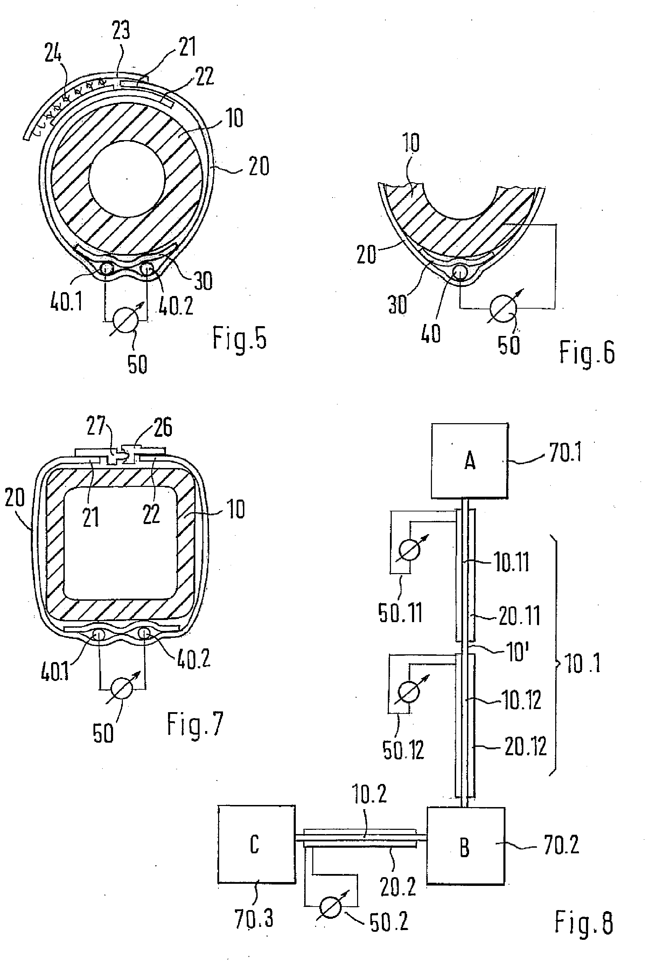

Die in Fig. 1 gezeigte Matte 20 aus saugfähigem Material, z.B. Baumwoll-Gewebe oder dgl., weist eine Länge auf, die sich über die gesamte Länge einer (in den Fig. 5, 6 und 7 gezeigten) Flüssigkeitsleitung 10 erstreckt. Die Breite der Matte 20 ist etwas größer als der Außenumfang der Flüssigkeitsleitung 10, damit sie überlappend an der Flüssigkeitsleitung 10 befestigt werden kann. Auf der der Flüssigkeitsleitung 10 zugekehrten Seite trägt die Matte 20 etwa in der Mitte der Breite zwei Elektroden 40.1 und 40.2, so dass die Matte 20 z. B. für eine Flüssigkeitsleitung 10 aus Kunststoff oder einem anderen nicht leitenden Material verwendet werden kann. An den Außenseiten der Ränder 21 und 22 der Matte 20 sind entlang der Länge der Matte 20 Verschlussstreifen 25 beabstandet angebracht. Die Matte 20 kann so um die Flüssigkeitsleitung 10 aus z. B. Kunststoff gelegt werden, dass die beiden Elektroden 40.1 und 40.2 unterhalb bzw. an der unteren Seite der Flüssigkeitsleitung 10, vorzugsweise an der tiefsten Stelle liegen. Die Verschlussstreifen 25 werden dabei untereinander verbunden und legen die Matte 20 überlappend an der Flüssigkeitsleitung 10 fest. Die beiden Elektroden 40.1 und 40.2 sind mit einer saugfähigen Schicht 30 auf der Matte 20 befestigt und abgedeckt. Die Matte 20 ist mit der Schicht 30 aus saugfähigem Material befestigt und zu der Flüssigkeitsleitung 10 hin abgedeckt. Die Verbindungsnähte 31 sorgen dafür, dass sich die blanken Elektroden 40.1 und 40.2 längs der Matte 20 nicht berühren.

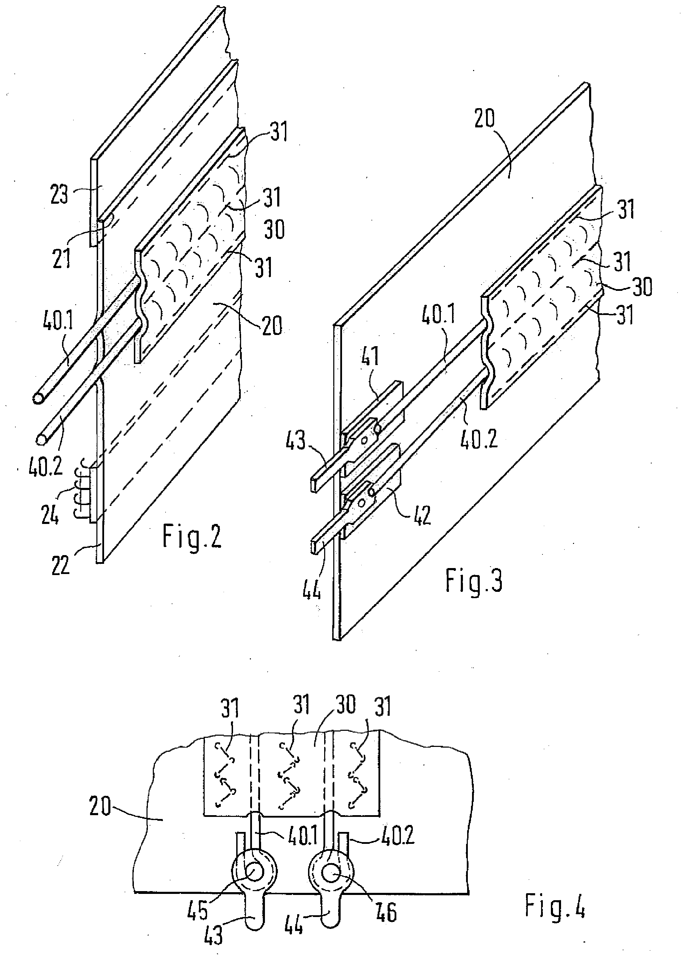

In Fig. 2 ist die Matte 20 mit anderen Befestigungsmitteln gezeigt. Der Rand 21 trägt auf der Außenseite einen längsgerichteten Streifen 23 eines Klettverschlusses, der am Rand 21 vorsteht. Der Rand 22 der Matte 20 trägt auf der Außenseite einen zurückgesetzten Streifen 24 eines Klettverschlusses. Auf diese Weise können die Ränder 21 und 22 über die gesamte Länge der Matte 20 überlappend miteinander verbunden werden.

Wie die Fig. 3 zeigt, können an einem Ende der Matte 20 die Elektroden 40.1 und 40.2 mit Anschlusskontakten 43 und 44 verbunden werden, die auf Befestigungsplatten 41 und 42 mit der Matte 20 und den Elektroden 40.1 und 40.2 verbunden sind.

Die Elektroden 40.1 und 40.2 können auch über Nieten 45 und 46 direkt mit den Anschlusskontakten 43 und 44 sowie der Matte 20 verbunden sein, wie Fig. 4 zeigt.

Die Matten 20 nach den Fig. 1 bis 4 können auch nur eine einzige Elektrode 40 tragen und können dann für die Verbindung mit einer Flüssigkeitsleitung 10 aus leitendem Material, insbesondere Metall verwendet werden. Ferner können über den Umfang auch mehrere in Längsrichtung entlang der Flüssigkeitsleitung 10 verlaufende Elektroden 40.1, 40.2 beabstandet voneinander angeordnet und für die Widerstandserfassung bzw. Impedanzerfassung elektrisch verschaltet sein.

Der in Fig. 5 gezeigte Querschnitt ist die überlappende Verbindung der Matte 20 nach Fig. 2 auf einer Flüssigkeitsleitung 10 aus z. B. Kunststoff. Dieser Querschnitt zeigt deutlich die Klettverschlussverbindung zwischen den beiden Streifen 23 und 24, die auf den Außenseiten der Ränder 21 vorstehend und zurückgesetzt längs der Matte 20 verlaufen. Zudem ist die Anordnung der Elektroden 40.1 und 40.2 auf der der Flüssigkeitsleitung 10 aus Kunststoff zugekehrten Seite der Matte 20 zu erkennen. An den beiden Elektroden 40.1 und 40.2 ist dann das Messgerät 50 angeschlossen, das mit einer eingebauten oder entfernt angeordneten Anzeigevorrichtung in Verbindung gebracht oder bringbar ist.

Der Querschnitt nach Fig. 6 unterscheidet sich vom Querschnitt nach Fig. 5 nur dadurch, dass bei der Matte 20 mit einer einzigen Elektrode 40 das Messgerät 50 an der Elektrode 40 und der Flüssigkeitsleitung 10 aus Metall angeschlossen ist.

Die Flüssigkeitsleitung 10 aus z. B. Kunststoff kann auch einen anderen, wie beispielsweise elliptischen, rechteckförmigen oder - wie in Fig. 7 gezeigt - quadratischen Querschnitt aufweisen. Die Ränder 21 und 22 der Matte 20 tragen dann streifenförmige Verbindungselemente 26 und 27, die sich über die gesamte Länge der Matte 20 erstrecken und direkt miteinander verbunden sind. Auch hierbei ist die Matte 20 so dimensioniert, dass die Elektroden 40.1 und 40.2 unterhalb der Flüssigkeitsleitung 10 und der Verschluss der Matte 20 mit den Verschlusselementen 26 und 27 über der Flüssigkeitsleitung 10 zu liegen kommt.

Die Fig. 8 zeigt eine Maschinen-Anlage mit drei Aggregaten 70.1, 70.2 und 70.3, die über die Flüssigkeitsleitungen 10.1 und 10.2 miteinander verbunden sind. Dabei ist die Flüssigkeitsleitung 10.1 aus zwei Teil-Flüssigkeitsleitungen 10.11 und 10.12 zusammengesetzt, die über ein Koppelglied 10' miteinander verbunden sind. Dabei sind den Teil-Flüssigkeitsleitungen 10.11 und 10.12 und der Flüssigkeitsleitung 10.2 eigene Messgeräte 50.11 und 50.12 sowie 50.2 zugeordnet. Damit lassen sich alle Teil-Flüssigkeitsleitungen 10.11 und 10.12 und die Flüssigkeitsleitung 10.2 individuell überwachen. Im Fehlerfalle kann von dem Messgerät ein optisches und/oder akustisches Signal zur Anzeige gebracht und/oder ein von einer Maschinensteuerung verwertbares Signal abgegeben werden.

## Patentansprüche

1. Vorrichtung zum Feststellen von Leckagen einer Flüssigkeitsleitung (10), insbesondere Hochdruck-Flüssigkeitsleitung, die Aggregate (70.1, 70.2, 70.3) einer Maschinen-Anlage miteinander verbindet, wobei die Flüssigkeitsleitung (10) aus nichtleitendem Material, insbesondere Kunststoff, besteht und mindestens zwei blanke Elektroden (40.1, 40.2) in Längsrichtung der Flüssigkeitsleitung (10) aufweist, die isoliert zueinander angeordnet sind und wobei die beiden Elektroden (40.1, 40.2) mit einem Messgerät (50) verbunden sind, das beim Ändern eines vorgegebenen Widerstandes oder einer Impedanz zwischen den beiden Elektroden (40.1, 40.2) ein Signal abgibt,
**dadurch gekennzeichnet,**
**dass** die Flüssigkeitsleitung (10) von einer Matte (20) vollständig umschlossen ist, die aus Baumwolle, saugfähigem Gewebe oder dgl. besteht, innen offen und an ihrer Außenseite mit einer flüssigkeitsdichten Folie abgeschlossen ist, dass die beiden Elektroden (40.1, 40.2) unter der Flüssigkeitsleitung (10) auf der der Flüssigkeitsleitung (10) zugekehrten Seite der Matte (20) angeordnet und mittels einer saugfähigen Schicht (30) darauf befestigt und abgedeckt sind, dass die beiden Elektroden (40.1, 40.2) am Ende der Flüssigkeitsleitung (10) für den Anschluss des Messgerätes (50) frei zugänglich sind, und
**dass** das Signal von einer Maschinensteuerung verwertet und/oder über eine Anzeigevorrichtung optisch und/oder akustisch abgebbar ist.

2. Vorrichtung zum Feststellen von Leckagen einer Flüssigkeitsleitung (10), insbesondere Hochdruck-Flüssigkeitsleitung, die Aggregate (70.1, 70.2, 70.3) einer Maschinen-Anlage miteinander verbindet, wobei die Flüssigkeitsleitung (10) aus leitendem Material, insbesondere Metall, besteht und mindestens eine blanke Elektrode (40) in Längsrichtung der Flüssigkeitsleitung (10) aufweist, die isoliert zur Flüssigkeitsleitung (10) angeordnet ist und wobei die Elektrode (40) und die Flüssigkeitsleitung (10) mit einem Messgerät (50) verbunden sind, das beim Ändern eines vorgegebenen Widerstandes oder einer Impedanz zwischen der Elektrode (40) und der Flüssigkeitsleitung (10) ein Signal abgibt,
**dadurch gekennzeichnet,**
**dass** die Flüssigkeitsleitung (10) von einer Matte (20) vollständig umschlossen ist, die aus Baumwolle, saugfähigem Gewebe oder dgl. besteht, innen offen und an ihrer Außenseite mit einer flüssigkeitsdichten Folie abgeschlossen ist, dass die Elektrode (40) unter der Flüssigkeitsleitung (10) auf der der Flüssigkeitsleitung (10) zugekehrten Seite angeordnet und mittels einer saugfähigen Schicht (30) darauf befestigt und abgedeckt ist,
**dass** die Elektrode (40) und die Flüssigkeitsleitung (10) für den Anschluss des Messgerätes (50) frei zugänglich sind und
**dass** das Signal von einer Maschinensteuerung verwertet und über eine Anzeigevorrichtung optisch und/oder akustisch abgebbar ist.

3. Vorrichtung nach Anspruch 1,
**dadurch gekennzeichnet,**
**dass** über den Umfang der Flüssigkeitsleitung (10) aus Metall mehrere, einzelne Elektroden (40) beabstandet in die Matte (20) eingebracht sind, die am Endbereich der Flüssigkeitsleitung parallel geschaltet und zusammen mit der Flüssigkeitsleitung (10) mit dem Messgerät (50) verbunden sind.

4. Vorrichtung nach Anspruch 2,
**dadurch gekennzeichnet,**
**dass** über den Umfang der Flüssigkeitsleitung (10) aus Kunststoff mehrere Paare von Elektroden (40.1; 40.2) beabstandet in die Matte (20) eingebracht sind, die am Ende der Flüssigkeitsleitung (10) getrennt voneinander parallel geschaltet und mit dem Messgerät (50) verbunden sind.

5. Vorrichtung nach Anspruch 1 und 2,
**dadurch gekennzeichnet,**
**dass** sich die Matte (20) in ihrer Länge über die gesamte Länge der Flüssigkeitsleitung (10) erstreckt und
**dass** die Breite der Matte (20) etwas größer ist als der Außenumfang der Flüssigkeitsleitung (10) und sich mit ihren längsgerichteten Rändern (21, 22) überlappt.

6. Vorrichtung nach Anspruch 5,
**dadurch gekennzeichnet,**
**dass** sich die längsgerichteten Ränder (21, 22) der Matte (20) über der Flüssigkeitsleitung (10) überlappen und über Streifen (23, 24) eines Klettverschlusses miteinander verbunden sind, wobei der eine Streifen (23) über die Außenseite des einen Randes (21) vorsteht und der andere Streifen (24) gegenüber dem längsgerichteten Rand (22) der Matte (20) auf deren Außenseite zurückgesetzt ist.

7. Vorrichtung nach Anspruch 5 und 6,
**dadurch gekennzeichnet,**
**dass** die überlappende Verbindung der Matte (20) über der Flüssigkeitsleitung (10) durch Klettverschlussstreifen (25) festgelegt ist, die in regelmäßigen Abständen um den Umfang der Flüssigkeitsleitung (10) mit der Matte (20) angeordnet und durch Verschluss der Klettverschlussstreifen (25) festgehalten sind.

8. Vorrichtung nach Anspruch 1 bis 7,
**dadurch gekennzeichnet,**
**dass** die eine Elektrode (40) oder die beiden Elektroden (40.1; 40.2) mit mindestens einem Ende an Anschlusskontakten (43, 44) angeschlossen sind, die auf der Matte (20) befestigt sind.

9. Vorrichtung nach Anspruch 1,
**dadurch gekennzeichnet,**
**dass** die längsgerichteten Ränder (21, 22) der Matte (20) über der Flüssigkeitsleitung (10) mit aufeinander abgestimmten Verschlusselementen (26, 27) versehen sind, die die Matte (20) geschlossen um die Flüssigkeitsleitung (10) halten.

10. Vorrichtung nach Anspruch 1,
**dadurch gekennzeichnet,**
**dass** eine Maschinen-Anlage mehrere Flüssigkeitsleitungen (10.1; 10.2) aufweist, die Aggregate (70.1; 70.2; 70.3) miteinander verbinden und dass jeder Flüssigkeitsleitung (10.1; 10.2) ein eigenes Messgerät (50.1; 50.2) mit Anzeigevorrichtung zugeordnet ist.

11. Vorrichtung nach Anspruch 10,
**dadurch gekennzeichnet,**
**dass** eine Flüssigkeitsleitung (10.1) aus Teil-Flüssigkeitsleitungen (10.11; 10.12) zusammengesetzt ist, die über ein Koppelglied (10') miteinander verbunden sind und denen eigene Messgeräte (50.1; 50.2) zugeordnet sind.

## Claims

1. A device for detecting leaks from a fluid conduit (10), in particular a highpressure liquid conduit, that interconnects units (70.1, 70.2, 70.3) of a machine system, wherein the fluid conduit (10) consists of a non-conductive material, in particular plastic, and has at least two uncoated electrodes (40.1, 40.2) arranged in the longitudinal direction of the fluid conduit (10) such that they are insulated from each other, and wherein the two electrodes (40.1, 40.2) are connected to a measuring instrument (50) that emits a signal if a change occurs in a prescribed resistance or impedance between the two electrodes (40.1, 40.2),
**characterized in that**
the fluid conduit (10) is completely enclosed by a mat (20) that consists of cotton, absorbent fabric or the like, is open internally and is sealed on its outer side with a liquid-tight film, **in that** the two electrodes (40.1, 40.2) are arranged below the fluid conduit (10) on the side of the mat (20) facing the fluid conduit (10) and are attached to it and covered by means of an absorbent layer (30), **in that** the two electrodes (40.1, 40.2) are freely accessible at the end of the fluid conduit (10) so that the measuring instrument (50) can be attached, and **in that** the signal is utilized by a machine control and/or can be emitted optically via a display device and/or acoustically.

2. A device for detecting leaks from a fluid conduit (10), in particular a highpressure liquid conduit, that interconnects units (70.1, 70.2, 70.3) of a machine system, wherein the fluid conduit (10) consists of a non-conductive material, in particular plastic, and has at least one uncoated electrode (40) arranged in the longitudinal direction of the fluid conduit (10) such that it is insulated from the fluid conduit (10), and wherein the electrode (40) and the fluid conduit (10) are connected to a measuring instrument (50) that emits a signal if a change occurs in a prescribed resistance or impedance between the electrode (40) and the fluid conduit (10),
**characterized in that**
the fluid conduit (10) is completely enclosed by a mat (20) that consists of cotton, absorbent fabric or the like, is open internally and is sealed on its outer side with a liquid-tight film, **in that** the electrode (40) is arranged below the fluid conduit (10) on the side facing the fluid conduit (10) and is attached to it and covered by means of an absorbent layer (30),
**in that** the electrode (40) is freely accessible at the end of the fluid conduit (10) so that the measuring instrument (50) can be attached, and
**in that** the signal is utilized by a machine control and/or can be emitted optically via a display device and/or acoustically.

3. The device according to claim 1,
**characterized in that**
multiple individual electrodes (40) are introduced into the mat (20) such that they are spaced apart over the circumference of the metal fluid conduit (10), said electrodes being connected in parallel in the end region of the fluid conduit and, together with the fluid conduit (10), being connected to the measuring instrument (50).

4. The device according to claim 2,
**characterized in that**
multiple pairs of electrodes (40.1, 40.2) are introduced into the mat (20) such that they are spaced apart over the circumference of the plastic fluid conduit (10), said electrodes being connected in parallel separately from one another in the end region of the fluid conduit (10) and being connected to the measuring instrument (50).

5. The device according to claims 1 and 2,
**characterized in that**
the length of the mat (20) extends over the entire length of the fluid conduit (10), and **in that** the width of the mat (20) is slightly greater than the outer circumference of the fluid conduit (10) and overlaps with its longitudinal edges (21, 22).

6. The device according to claim 5,
**characterized in that**
the longitudinal edges (21, 22) of the mat (20) overlap with the fluid conduit (10) and are connected to each other by strips (23, 24) of a hook-and-loop fastener, wherein one strip (23) protrudes over the outer side of one edge (21) and the other strip (24) is recessed opposite the longitudinal edge (22) of the mat (20) on its outer side.

7. The device according to claims 5 and 6,
**characterized in that**
the overlapping connection of the mat (20) over the fluid conduit (10) is established by the strips of hook-and-loop fastener (25), which are arranged with the mat (20) at regular intervals around the circumference of the fluid conduit (10) and are held in place by the fastening of the hook-and-loop fastener strips (25).

8. The device according to claims 1 through 7,
**characterized in that**
one electrode (40) or both electrodes (40.1, 40.2) are connected to connection contacts (43, 44) that are attached to the mat (20).

9. The device according to claim 1,
**characterized in that**
the longitudinal edges (21, 22) of the mat (20) over the fluid conduit (10) are provided with corresponding closure elements (26, 27), which hold the mat (20) closed around the fluid conduit (10).

10. The device according to claim 1,
**characterized in that**
a machine system has multiple fluid conduit (10.1, 10.2) that interconnect the units (70.1, 70.2, 70.3), and **in that** each fluid conduit (10.1, 10.2) is assigned its own measuring instrument (50.1, 50.2) with a display device.

11. The device according to claim 10,
**characterized in that**
a fluid conduit (10.1) consists of partial fluid conduits (10.11, 10.12) which are interconnected by a coupling member (10') and each of which is assigned its own measuring instrument (50.1, 50.2).

## Revendications

1. Dispositif de détermination de fuites d'une conduite de liquide (10), en particulier d'une conduite de liquide à haute pression, qui relie l'une à l'autre des unités (70.1, 70.2, 70.3) d'une installation de machine, dans lequel la conduite de liquide (10) est constituée d'un matériau non conducteur, en particulier d'une matière plastique, et présente au moins deux électrodes nues (40.1, 40.2) dans la direction longitudinale de la conduite de liquide (10), qui sont agencées isolément l'une de l'autre, et dans lequel les deux électrodes (40.1, 40.2) sont connectées à un appareil de mesure (50), qui délivre un signal lors de la modification d'une résistance prédéterminée ou d'une impédance entre les deux électrodes (40.1, 40.2),
**caractérisé en ce que** :
la conduite de liquide (10) est complètement entourée par une natte (20), qui est constituée de coton, d'un tissu absorbant ou analogue, est ouverte à l'intérieur et isolée sur sa face extérieure par un film étanche aux liquides,
les deux électrodes (40.1, 40.2) sont agencés en dessous de la conduite de liquide (10) sur la face de la natte (20) tournée vers la conduite de liquide (10) et fixées et revêtues sur celle-ci au moyen d'une couche absorbante (20),
les deux électrodes (40.1, 40.2) sont librement accessibles à l'extrémité de la conduite de liquide (10) pour la connexion de l'appareil de mesure (50) et
le signal est utilisé par une commande de machine et/ou peut être délivré en mode optique et/ou acoustique via un dispositif d'affichage.

2. Dispositif de détermination de fuites d'une conduite de liquide (10), en particulier d'une conduite de liquide à haute pression, qui relie l'une à l'autre des unités (70.1, 70.2, 70.3) d'une installation de machines, dans lequel la conduite de liquide (10) est constituée d'un matériau conducteur, en particulier d'un métal, et présente au moins une électrode nue (40) dans la direction longitudinale de la conduite de liquide (10), qui est agencée isolément de la conduite de liquide (10) et dans lequel l'électrode (40) et la conduite de liquide (10) sont connectées à un appareil de mesure (50), qui délivre un signal lors de la modification d'une résistance prédéterminée ou d'une impédance entre l'électrode (40) et la conduite de liquide (10),
**caractérisé en ce que** :
la conduite de liquide (10) est entourée complètement par une natte (20), qui est constituée de coton, d'un tissu absorbant ou analogue, est ouverte à l'intérieur et est isolée sur sa face extérieure par un film étanche aux liquides,
l'électrode (40) est agencée en dessous de la conduite de liquide (10) sur la face tournée vers la conduite de liquide (10) et est fixée et revêtue sur celle-ci au moyen d'une couche absorbante (30),
l'électrode (40) et la conduite de liquide (10) sont librement accessibles pour la connexion de l'appareil de mesure (50) et
le signal est utilisé par une commande de machine et peut être délivré en mode optique et/ou acoustique via un dispositif d'affichage.

3. Dispositif selon la revendication 1,
**caractérisé en ce que** :
sur la périphérie de la conduite de liquide (10) en métal sont insérées plusieurs électrodes individuelles (40) distancées dans la natte (20), qui sont commutées en parallèle dans la zone d'extrémité de la conduite de liquide et sont connectées à l'appareil de mesure (50) conjointement avec la conduite de liquide (10).

4. Dispositif selon la revendication 2,
**caractérisé en ce que** :
sur la périphérie de la conduite de liquide (10) en matière plastique sont insérées plusieurs paires d'électrodes (40.1 ; 40.2) distancées dans la natte (20), qui sont commutées séparément l'une de l'autre en parallèle à l'extrémité de la conduite de liquide (10) et sont connectées à l'appareil de mesure (50).

5. Dispositif selon les revendications 1 et 2,
**caractérisé en ce que** :
la natte (20) s'étend dans sa longueur sur toute la longueur de la conduite de liquide (10) et
la largeur de la natte (20) est un peu plus grande que celle de la périphérie externe de la conduite de liquide (10) et se chevauche par ses bords dirigés longitudinalement (21, 22).

6. Dispositif selon la revendication 5,
**caractérisé en ce que** :
les bords dirigés longitudinalement (21, 22) de la natte (20) se chevauchent sur la conduite de liquide (10) et sont raccordés l'un à l'autre via des rubans (23, 24) d'une fermeture velcro, dans lequel le premier ruban (23) fait saillie sur la face externe du premier bord (21) et l'autre ruban (24) est rabattu sur sa face externe vis-à-vis du bord dirigé longitudinalement (22) de la natte (20).

7. Dispositif selon les revendications 5 et 6,
**caractérisé en ce que** :
la liaison chevauchante de la natte (20) sur la conduite de liquide (10) est fixée par des rubans de fermeture velcro (25) qui sont agencés à intervalles réguliers sur la périphérie de la conduite de liquide (10) avec la natte (20) et sont retenus par immobilisation des rubans de fermeture velcro (25).

8. Dispositif selon les revendications 1 à 7,
**caractérisé en ce que** :
la première électrode (40) ou les deux électrodes (40.1, 40.2) est ou sont raccordées à au moins une extrémité à des contacts de connexion (43, 44) qui sont fixés sur la natte (20).

9. Dispositif selon la revendication 1,
**caractérisé en ce que** :
les bords dirigés longitudinalement (21, 22) de la natte (20) sont pourvus sur la conduite de liquide (10) d'éléments de fermeture (26, 27) adaptés l'un à l'autre et qui maintiennent fermée la natte (20) autour de la conduite de liquide (10).

10. Dispositif selon la revendication 1,
**caractérisé en ce que** :
une installation de machine présente plusieurs conduites de liquide (10.1 ; 10.2) qui relient l'une à l'autre des unités (70.1 ; 70.2 ; 70.3) et
à chaque conduite de liquide (10.1 ; 10.2) est affecté un appareil de mesure propre (50.1 ; 50.2) avec un dispositif d'affichage.

11. Dispositif selon la revendication 10,
**caractérisé en ce que** :
une conduite de liquide (10.1) est composée de conduites de liquide partielles (10.11 ; 10.12), qui sont reliées l'une à l'autre via un élément de couplage (10') et auxquelles sont affectés des appareils de mesure propres (50.1 ; 50.2).
